# EUROPEAN PATENT APPLICATION

(11) **EP 3 581 143 A1**
(43) Date of publication of application: **18.12.2019**
(21) Application number: 18305712.4
(22) Date of filing: 12.06.2018
(51) Int. Cl.: A61C 7/14

(54) **AN ORTHODONTIC SYSTEM FOR THE ORTHODONTIC TREATMENT OF A PATIENT'S TEETH, A METHOD FOR THE PLACEMENT OF AN APPLIANCE FOR THE ORTHODONTIC TREATMENT OF A PATIENT'S TEETH, AND A USE OF THE APPLIANCE OF SUCH AN ORTHODONTIC SYSTEM**

(71) Applicant: 3C, 92200 Neuilly sur Seine (FR)
(72) Inventor: CURIEL, Bruno, 43583 Raanana (IL); COUDRIN, Benjamin, 78000 Versailles (FR); ERNENWEIN, Didier, 75016 Paris (FR); HARVENT, Jacques, 94130 Nogent sur Marne (FR)
(74) Representative: Plasseraud IP

(57) **Abstract**

Method for the placement of an appliance (10), orthodontic system for the orthodontic treatment of a patient's teeth (11) and use of the appliance (10) of the orthodontic system (13), the orthodontic system (13) comprising an appliance (10) and a jig, wherein the appliance (10) comprises pearls (15) which are each provided with a slot (18) into which an orthodontic wire (12) can be inserted, wherein the pearls (15) are interconnected by means of the jig and wherein the jig comprises separated caps, said caps being shaped individually to the shape of the teeth (11).

## Description

### FIELD OF THE DISCLOSURE

The disclosure relates to an orthodontic system for the orthodontic treatment of a patient's teeth, to a method for the placement of an appliance for the orthodontic treatment of a patient's teeth and a use of the appliance of such an orthodontic system.

### BACKGROUND OF THE DISCLOSURE

In the field of orthodontics, it is known to fit a patient suffering from malocclusion of the jaws and/or dental misalignment with an orthodontic appliance intended to align the teeth over the course of a period of treatment. Each orthodontic appliance may be produced individually for each patient or not. Different treatment techniques exist on the market.

In a known manner, orthodontic appliances exist comprising one or a plurality of orthodontic wires, a plurality of brackets which are each provided with one or a plurality of slots wherein the orthodontic wire may be inserted, or attachment means whereby the wire may be held. These appliances are offered in two versions.

In the labial version, the brackets are arranged on the outer (labial) surface of the teeth. The orthodontic archwire is then inserted into the slots of the brackets so as to align the teeth. In this version, the brackets are visible when the subject wearing them smiles.

In the lingual version, the brackets are arranged on the inner (lingual) surface of the teeth. The brackets are then externally invisible.

The problem of these orthodontic appliances lies, inter alia, in the placement thereof and in the time required for this placement.

In a known manner, the treatment may be customized or non-customized.

When the treatment is not customized, it is essential to position the brackets at precise locations on the teeth so as to minimise the number of bends on the orthodontic arch. The correct position of each tooth is dependent on the interaction between the orthodontic bracket and the arch. Therefore, the dental alignment result is greatly dependent on the competency of the practitioner in compensating for the variability of the morphology of the teeth on the arch.

Indeed, as a general rule, each tooth for each patient has its own morphology. It is therefore easy to understand that a standard bracket, i.e. mass-produced, will never allow the expression of the optimal movement of the tooth. For this reason, the orthodontist intervenes by creating some bends on the orthodontic arch: these bends compensate for the difference in morphology.

The placement of such orthodontic appliances even if performed by specialists in the field (orthodontists) remains hazardous in some cases. The precise positioning of the brackets on the teeth remains difficult and makes it hardly possible to obtain an ideal alignment due to the variable morphology of the labial and/or lingual surfaces of the teeth.

To remedy this problem, it is known to use customized methods, more particularly in lingual versions where the morphology of the teeth is highly variable.

When the treatment is customized, i.e. custom-made, two major categories of systems are known.

The first category includes systems using standard brackets. These brackets may be arranged arbitrarily on the teeth, and an arch then needs to be adapted to transmit the force and the movement required for the displacement of the teeth. This arch is designed digitally and bent three-dimensionally by bending robots.

The second category includes systems using customized brackets and a customized arch produced two-dimensionally. The benefit of using both a customized arch and customized brackets is that of reducing the number of bends on the arch. A high number of bends prevents proper sliding of the arch and hence proper levelling of the teeth.

In order to use these customized systems and so as to position the orthodontic brackets and/or the orthodontic archwire correctly, customized system production requires digital setup of the orthodontic treatment. The digital setup is a simulation of the corrected position of the teeth performed on the basis of the malocclusion.

Once this simulation has been carried out, the orthodontic brackets and the orthodontic archwires are designed digitally and positioned digitally on this simulation. The archwires and the brackets are subsequently produced for example by CAD/CAM. The subsequent step consists of producing a transfer system so as to enable the positioning of the brackets produced (actual) either on the malocclusion model or directly in the mouth.

For this, it is therefore essential either to:
- reposition the brackets correctly on the malocclusion and construct a thermoformed or silicone transfer tray.
- Or produce rigid positioning jigs so as to reposition the brackets produced directly in the mouth;

The objective being obviously to be able to position in the mouth, i.e. on the patient's teeth, the brackets in an identical scenario to the virtual positioning of the same virtual brackets on the virtual teeth (digital setup)

In these two scenarios, the following problems arise:
- In order to reposition the brackets correctly on the malocclusion model, it is for example necessary to manufacture a plaster malocclusion model or imprint the malocclusion model directly by stereolithography.
- It is then necessary to produce a mould on top, referred to as a transfer tray which is frequently made of silicone or is thermoformed: this is not always very precise as it is necessary to release the whole (transfer tray and brackets produced) and subsequently replace the brackets very precisely in this tray. Any inaccurate placement of the brackets in the tray reduces the benefit of customized systems.
- Second source of imprecision: as the trays are flexible, the practitioner must press perfectly against the tray to place all the brackets in contact with the teeth
- As regards the rigid jig system, there is also a source of error associated with the manual positioning of the brackets in these jigs; any bracket inserted incorrectly into the jigs would similarly give rise to a difference between the digital simulation of the alignment of the teeth and the actual alignment of the teeth in the mouth.

In sum, any inaccurate repositioning would jeopardise the perfect efficacy of customized systems and we have seen that all current systems include sources of repositioning error at different possible levels.

Therefore, it is known to use positioning systems for holding the brackets in a suitable position during the bonding thereof onto the teeth. It is known, for example from the document US7094053B2 that a rigid jig conforming to one or a plurality of teeth is attached to one or a plurality of brackets by separate and removable intermediate parts. Although the system described theoretically makes it possible to minimise errors during positioning, errors remain during the assembly of the intermediate part with the bracket and with the jig. It is also known from the document EP2571449A1 that a rigid jig conforming to the tooth fits closely to the base of the bracket on at least a portion of at least one of the edges thereof. However, positioning errors are still present given that the brackets and the jig are not in one piece. These systems must be adapted for each geometry of the brackets. The use of increasingly small brackets renders the design and production of the intermediate parts and of the attachment systems difficult, the positioning errors are amplified, and the systems complicated to handle. The use of such orthodontic appliances frequently requires long periods of training (for lingual procedures), and frequently requires significant time-in-chair. The orthodontic archwire is inserted into the slots of the brackets after bonding said brackets in the mouth.

### SUMMARY OF THE DISCLOSURE

The aim of the present disclosure is that of providing an orthodontic system for the placement of an appliance for the orthodontic treatment of a patient's teeth not having at least some of the drawbacks of the orthodontic systems known from the prior art.

In the following description, a pearl is smoother than the brackets known from the prior art, but has the function of a bracket for the orthodontic wire or archwire. Such a pearl is placed on the tooth and is provided with an opening to receive the orthodontic archwire.

As such, all the above sources of errors in terms of the positioning of the pearls (produced) on the teeth with respect to the positioning of the digital pearls on the digital simulation are eliminated.

After bonding this "all-in-one" assembly in the mouth, i.e. the orthodontic system of the disclosure, the practitioner merely needs to separate (potentially at the pre-fracture zone designated in the single piece) the positioning system from the pearls with the latter remaining bonded to the teeth.

This aim of the disclosure is achieved by means of an orthodontic system for the orthodontic treatment of a patient's teeth, the orthodontic system comprising an appliance and a jig, wherein the appliance comprises pearls which are each provided with a slot into which an orthodontic wire can be inserted, wherein the pearls are interconnected by means of the jig and wherein the jig comprises separated caps, said caps being shaped individually to the shape of the teeth.

As such, advantageously, the placement of the appliance is facilitated and the correct positioning of the pearls is ensured.

In preferred embodiments of the disclosure, one and/or another of the following arrangements may optionally be used:
- the caps are interconnected;
- the jig further includes a master-jig, the caps being interconnected by means of the master-jig;
- the pearls are each detachable from the jig;
- the caps are connected to the pearls;
- the pearls are each detachable from caps;
- the orthodontic system further comprises at least one mark.

Another aim of the present disclosure is that of providing a method for the placement of an appliance for the orthodontic treatment of a patient's teeth not having at least some of the drawbacks of the orthodontic systems known from the prior art. In particular, the method for the placement of an appliance according to the disclosure is facilitated and correct positioning of the pearls is ensured compared to known methods.

This aim of the disclosure is achieved by means of a method for the placement of an appliance for the orthodontic treatment of a patient's teeth, the appliance comprising pearls which are each provided with a slot into which an orthodontic wire can be inserted, the method comprising a step of placement of an orthodontic system on the patient's teeth, the orthodontic system comprising the appliance and a jig, the jig comprising separated caps, said caps being shaped individually to the shape of the teeth, wherein the pearls are positioned simultaneously on the teeth in being interconnected by means of the jig.

In preferred embodiments of the disclosure, one and/or another of the following arrangements may optionally be used:
after the step of placement of the orthodontic system, the pearls are each detached from the jig;
the pearls are each detached from the connectors via which they are attached to the jig;
the pearls are coated;
the external surface of the pearls comprises a smooth material;
the material of the slot comprises metal;
the slot is in metal;
the method further comprises a step of removal of the jig, the jig further including a master-jig, the caps being interconnected by means of the master-jig;
the method further comprises a step wherein an orthodontic wire is inserted into the slot of each of the pearls;
the orthodontic wire is inserted into the slot of each of the pearls prior the placement of the orthodontic system on the patient's teeth;
the orthodontic system is provided with a mark and the placement of the orthodontic system is made correctly thanks to the mark.

Another aim of the present disclosure is that of providing a use of the appliance of such an orthodontic system not having at least some of the drawbacks of the orthodontic systems known from the prior art.

### BRIEF DESCRIPTION OF THE DRAWINGS

Further features and advantages of the disclosure will emerge in the course of the following description of one of the embodiments thereof, given by way of non-limiting example, with reference to the drawings attached. In the various figures, the same references denote identical or similar elements.

In the drawings:
- Figure 1A is a schematic perspective view of an appliance according to the prior art;
- Figure 1B is a schematic perspective view of an appliance according to the disclosure;
- Figure 2A is a bottom view of the orthodontic device according to the disclosure with the positioning of the appliance of Fig. 1B, using the method according to the disclosure;
- Figure 2B is a bottom view of the positioning of the appliance in figure 2A after separation from the jig;
- Figure 3A is a perspective view of a pearl of the appliance in figure 2A;
- Figure 3B is a perspective view of the pearl in figure 3A;
- Figure 4A is a perspective side view of a pearl according to a further embodiment,
- Figure 4B is a perspective front view of the pearl in figure 4A;
- Figure 4C is a perspective side view of the pearl in figure 4A with an arm;
- Figure 4D is a perspective front view of the pearl in figure 4A with an arm;
- Figure 4E is a perspective front view of the pearl in figure 4A with an arm and a master-jig (i.e. an arcuate wire), the whole placed on the lingual side of the tooth to be treated;
- Figure 5 is a perspective view of another embodiment of an orthodontic device according to the disclosure;
- Figure 6A is a perspective view of the embodiment of an orthodontic device illustrating the orthodontic wire placement; and
- Figure 6B is a perspective view of the embodiment of Figure 6A with added skirt elements illustrating the orthodontic wire placement.

### DETAILED DESCRIPTION OF THE DISCLOSURE

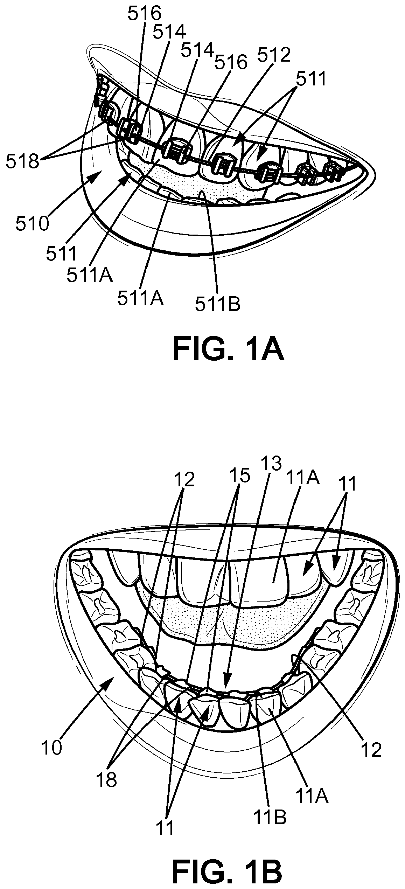

Figures 1A illustrates schematically an orthodontic appliance 510 known in the prior art and placed on a patient's teeth 511 according to a method known from the prior art. The appliance 510 comprises an orthodontic wire 512 and a plurality of brackets 516 and bases 514. Each base 514 is fixed between a corresponding tooth 511 and bracket 516. Each bracket 516 is provided with a slot 518 wherein the orthodontic wire 512 is inserted.

Generally, as disclosed in document US 8678817 B2, such a bracket includes a mounting base for attachment to a tooth surface and an archwire slot formed upon the base and sized for receiving an orthodontic archwire (or orthodontic wire) .

Figure 1A schematically illustrates an appliance 510 known in the prior art that consists of a labial version, wherein the brackets are arranged on the outer (labial) surface 511A of the teeth 511. The orthodontic wire 512 is inserted into the slots 518 of the brackets 516 so as to align the teeth 511 over the course of the treatment. In this version, the brackets 516 are visible when the patient smiles.

Due to their geometry and/or dimensions, such known brackets 516 are easily visible, that make the brackets 516 unaesthetic. Furthermore, and especially when the brackets are placed on the lingual surface of a tooth (not depicted on the figs.), the brackets as already known could cause a discomfort, when, for example, the tongue touches the brackets.

The patient prefers for this reason to have an appliance 10 according to the disclosure and described hereinafter.

Figure 1B illustrates a schematic perspective view of an appliance 10 according to the disclosure.

This embodiment consists of a lingual version, wherein pearls 15 that replace the brackets 16 and bases 14 are arranged on the inner (lingual) surface 11B of the teeth 11. The pearls 15 are then outwardly invisible. The disclosure is however not limited to such a version, the labial version being also part of the disclosure although not depicted on the figures.

In both versions (lingual or labial), the placement of the appliance would be a difficult procedure should it be necessary to position each pearl 15 individually; the pearl 15 is generally bonded onto the tooth 11. However, according to the disclosure, this difficulty is overcome thanks to the orthodontic system and to the fact that the pearls are linked and placed together optimally on each tooth 11 to be treated.

Such a pearl allows notably being blended with the tooth. More precisely, with a pearl defined in the disclosure, the patient does not feel (or barely) it in his/her mouth. Besides, such a pearl is very aesthetic since it is little or no visible. The pearl 15 has the function of a bracket for the orthodontic wire 12. In addition the pearl 15 can be generally smaller than the brackets known from the prior art. Therefore, the pearls according to the disclosure are less incommoding. In addition, with the appliance of the disclosure no base is needed on the contrary to the appliance known from the prior art, where a base is placed between the tooth and the bracket.

As for embodiments known from the prior art, the embodiment in the lingual version (figure 1B) is more visually appealing than in a labial version (not depicted). In addition, the labial version is more visually appealing than the embodiment known from labial version from the prior art (figure 1A) and the lingual version (figure 1B) is more visually appealing than the embodiment known from the prior art (not depicted). However, the lingual version (figure 1B) is more difficult to place on the patient's teeth 11, since access to the teeth 11 is more difficult on the lingual side than on the labial side.

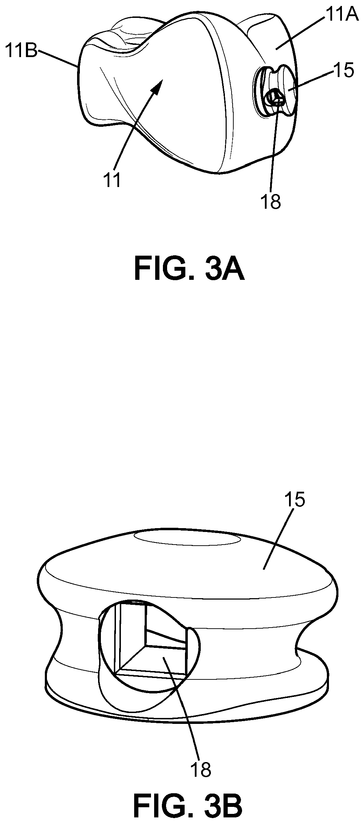

As seen more clearly in figures 3A and 3B, each pearl 15 is provided with a slot 18 wherein the archwire or orthodontic wire 12 is inserted (not shown in figures 3A-3B). This slot 18 may have a square cross-section, as represented in figure 3B, but the cross-section may also be rectangular or circular or any other shape. The orthodontic wire 12 may for its part have a round or square cross-section or a cross-section of any other shape.

The pearls 15 may be of any shape, they may for example include wings, an intermediate part for optionally receiving chains or a second slot. The pearls 15 are attached to the teeth 11 using known attachment means, for example by bonding.

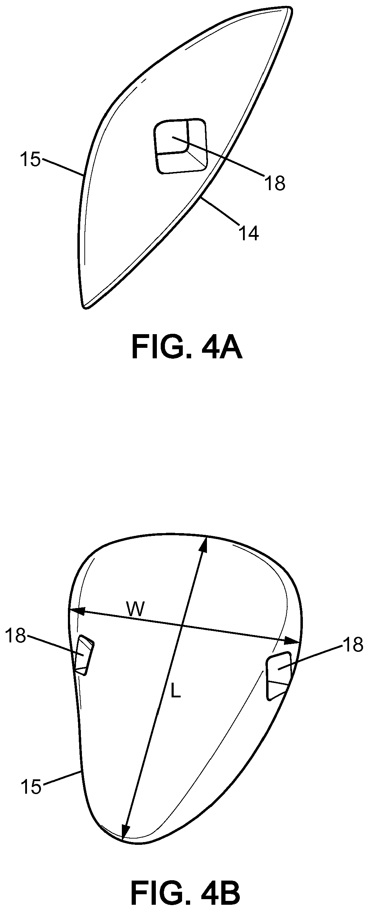

A first embodiment of the pearl according to the disclosure is depicted on Figs. 3A and 3B and a second embodiment of the pearl according to the disclosure is depicted on Figs. 4A to 4E. The second embodiment has a surface opposite to the surface in contact with the teeth which does not comprise any sharp corner. In other words, there is no surface irregularity or roughness on the surface. The surface is therefore smooth. The surface thus shaped in such a way that it completes the external aspect of a tooth 11.

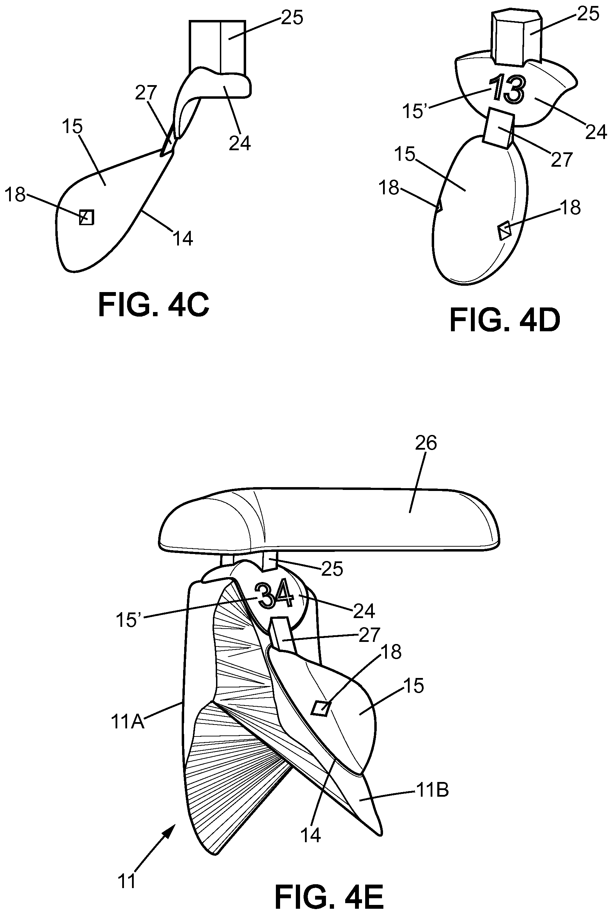

In addition, the surface has a domed shape. As depicted in figure 4C for example, the surface is convex. The convexity of the surface may be more or less pronounced.

With reference to figures 4C and 4D, a connector 27 is connected to the pearl 15 and the cap 24. The cap 24 may be provided with said connector 27 and an arm 25.

Figure 4E is a perspective front view of the pearl in figure 4A with an arm 25 and an arcuate wire, i.e. a master-jig 26, the whole placed on the lingual side 11B on a tooth 11 to be treated. Such a master-jig 26 may have an arcuate shape or a bean shape or any other relevant shape; actually, the shape of the master-jig follows the shape of the dental arch to be treated.

The whole could obviously be arranged on the side of the outer face 11A of the teeth 11. The cap 24 is arranged on a tooth 11. In this position, the pearl 15 is correctly positioned on the tooth 11.

In this embodiment, the master-jig 26 is situated above the arms 25, but it could be arranged to the front, on the side of the outer face 11A of the teeth 11 (or on the lingual side 11B when the appliance is placed on the outer face 11A of the teeth 11).

Advantageously, according to the tooth onto which it will be placed, the dimensions of the pearl is comprised between 2,0 mm and 3,0 mm in width W and between 3,0 mm and 4,0 mm in length L. Preferably, the volume is comprised between 2,0 mm³ (cubic millimeter) and 25,0 mm³. The pearl 15 has thus a particular compact size relative to a tooth. For example, on an adult tooth, the pearl 15 occupies between 20% and 99% of the lingual surface of the tooth. The pearl may have a shape that is anatomic and/or isomorphic with the teeth. In other words, for a tooth that is wider on its top free end than on its base, the shape of the pearl can also be wider toward the top free end of the tooth than toward the base of the tooth.

In addition, the pearl weights between 1 g (gram) and 10 g.

The pearl 15 is for example made of ceramic material. Ceramic has a similar color to the one of a tooth, which improves the aesthetic property of the pearl 15. In addition, ceramic is biocompatible, which means that it is compatible with an utilization for a human body. Ceramic is also a material resistant to load, which provides a good bearing of the pearl 15 regarding the load applied by the orthodontic wire 12 on the pearl 15. However, the pearl 15 may be made of other materials such as biocompatible resins, ceramics and/or other kinds of materials may however be used. The orthodontic system may be manufactured in one element or in separated elements. When manufactured in separated elements, the orthodontic system 13 is prior being put in the mouth of the patient assembled together.

These particular dimensions of the pearls provide an aesthetic result of the pearl. In addition, when a person runs his/her tongue over his/her tooth, he/she does not have the feeling the tooth comprises a foreign connector on its surface. Due to the small dimensions of the pearl, the tongue does not hook on the pearl, or is not skinned when running over the pearl.

Regardless of the version (lingual or labial), the appliance 10 may be placed on the lower jaw (mandible) or on the upper jaw (maxilla).

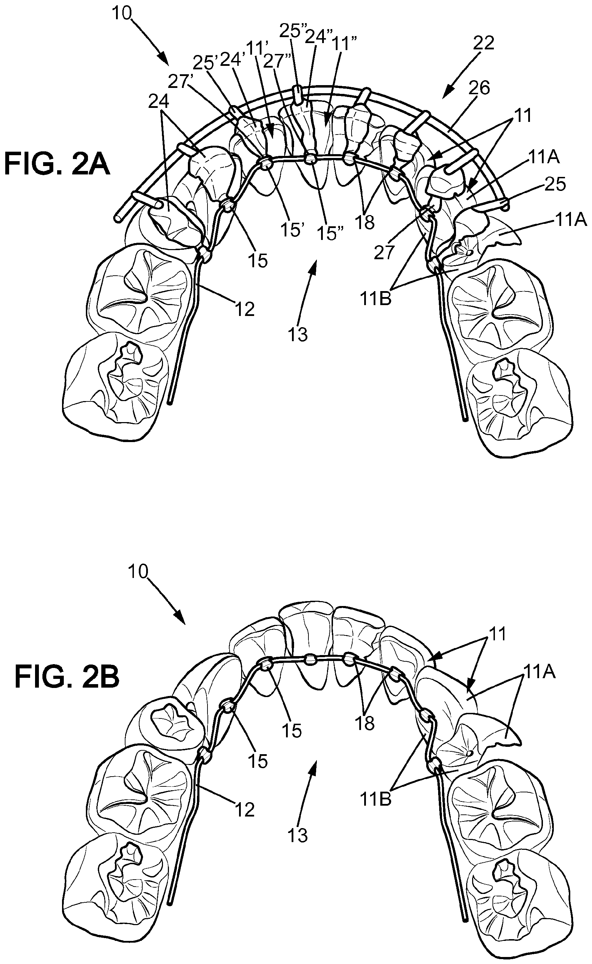

Furthermore, regardless of the version, the appliance 10 may include the same number of pearls 15 as teeth 11 in the mandible or indeed a lower number. Indeed, not all the teeth 11 in a jaw necessarily need to be treated and, in this case, it is appropriate to only place pearls on the teeth to be treated. As such, the appliance 10 may include pearls which are not all arranged in succession from one tooth to the adjacent tooth. In the example illustrated in figures 2A and 2B, the jaw includes twelve teeth 11, whereas only eight are to be treated; therefore, the appliance merely includes eight pearls 15. In this example, the pearls are in succession from one tooth to the other. The appliance may for example be arranged on merely two teeth, but can be arranged on more than two teeth as disclosed above.

In order to facilitate the placement of an orthodontic appliance 10 as described above and ensure correct positioning of each of the pearls 15 on the relevant tooth 11, the disclosure relates to a placement method wherein the set of pearls 15 is manufactured in one piece so that the pearls 15 are positioned simultaneously on the teeth 11 without any possible error as illustrated in figure 2A. The method according to the disclosure is described with reference to the appliance 10 illustrated in figures 2A and 2B is a lingual appliance, but it is understood that it is applicable in the same way to the placement of a labial version appliance 10.

According to the disclosure, the simultaneous positioning of the pearls 15 is carried out using a single assembly or device 11, where all the pearls 15 are interconnected by means of connectors. These connectors have a rigidity that avoids the pearls to be unintentionally displaced one with regard to the other prior the placement in the mouth. In this instance, as illustrated in figure 2A, the pearls 15 are interconnected by means of a jig 22. The jig 22 may comprise separated caps 24. The caps 24 may be shaped individually to the shape of the teeth 11. Besides, as illustrated in figure 2A, the pearls 15 may be interconnected by means of an arcuate wire, i.e. a master-jig 26 provided on the jig 22.

The connectors may have a bridge function, forming a link between one or more pearls 15. The bridges may form a link between one or a plurality of pearls 15 and the master-jig 26. The bridges may also form a link between one or a plurality of caps 24 and one or a plurality of pearls 15.

The caps 24 are preferably shaped individually to the shape of the teeth 11. As such, by way of example, the cap 24' is shaped to the tooth 11', whereas the adjacent cap 11'' is shaped to the adjacent tooth to be treated 11".

In order to facilitate the placement of an orthodontic appliance 10 as described above (first embodiment or second embodiment) and ensure correct positioning of each of the pearls 15 on the relevant tooth 11, at least one mark 15' may be provided on the orthodontic system 13. Such a mark 15' facilitates the placement of the orthodontic system 13 and more precisely the appliance 10 on the correct tooth, especially when not all the teeth are treated. For instance, each pearl or preferably each cap 24 is provided with a mark 15'. Not each pearl or cap needs to be provided with a mark 15', actually only one is enough on one of the pearl or cap. For instance, the mark 15' may correspond to the tooth number onto which the corresponding pearl is to be placed (see Figs. 4D and 4E). In the examples depicted, the mark 15' may be 13 as depicted on Fig. 4D and the mark 15' may be 34 as depicted on Fig. 4E.

Besides, the jig 22 comprises the caps 24 and the master-jig 26. In order to obtain a single assembly, the caps 24 may be interconnected by means of the master-jig 26. The master-jig 26 may be rigid such that the rigidity of the assembly is increased.

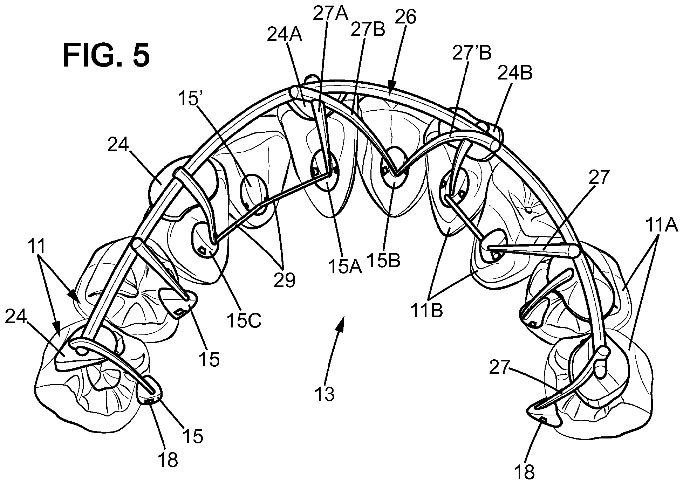

Each of the caps 24 may be connected to the master-jig 26 by means of an arm 25. In the absence of arms 25, the caps 24 are directly connected to the master-jig 26 as depicted on Fig. 5.

Besides, should the orthodontic system 13 have arms 25 or not, the caps 24 may be connected to a pearl 15 via a connector 27. Actually, each cap 24 may be connected to a corresponding pearl 15 via a connector 27. However, several pearls 15 may be connected to a sole cap 25 as depicted on fig. 5. In that case, the common cap 25 is connected individually to the pearls 15 via corresponding connectors 27.

Besides, as depicted on fig. 5, the orthodontic system 13 may also be provided with fewer caps 25 than the number of pearls 15. Actually, one pearl 15 can be connected to one or more cap(s) 25; the number of connectors being adapted to the number of caps to which the pearl is connected. For instance, as depicted on Fig. 5, the pearl 25' is connected to a first cap 24A via a first connector 27B and to a second cap 24B via a second connector 27'B. In that case, the cap 24A is connected to two pearls 15A and 15B via corresponding connectors 27A and 27B. Besides, as depicted on Fig. 5, a pearl may be connected to adjacent pearls via pearl connectors 29. For instance, the pearl 15' is connected to pearl 15A and 15C via pearl connectors 29.

As such, by way of example, the cap 24' is connected on one hand to the master-jig 26 and on the other to a pearl 15'; similarly, the cap 24" is connected on one hand to the master-jig 26 and on the other to a pearl 15". More specifically, the cap 24' is connected on one hand to the master-jig 26 by the arm 25' and on the other to a pearl 14' by the connector 27'; similarly, the cap 24" is connected on one hand to the master-jig 26 by the arm 25" and on the other to a pearl 14" by the connector 27". However, according to the disclosure, there is no need to have an arm and a connector between the corresponding cap and pearl. Actually, one or more pearls may be connected to a same cap 24 via corresponding connectors 27.

When the appliance 10 is lingual, as illustrated in figure 2A, the master-jig 26 is situated on the side of the outer face 11A of the teeth 11, whereas the orthodontic wire 12 is situated on the side of the inner face 11B of the teeth 11.

The design of the jig 22 is customised such that during the placement of the appliance 10, each pearl 15 is positioned exactly where needed on the relevant tooth 11.

In order to use the jig 22 and so as to position the pearls 25 and/or the orthodontic archwire 12 correctly, a digital setup of the orthodontic treatment is required. The digital setup is a simulation of the corrected position of the teeth performed on the basis of the malocclusion. The digital initial (malocclusion) model is obtained directly from the output of an intraoral scanner or from the scan of an imprint (for example in silicone) of the patient's teeth.

Once this simulation has been carried out, the corrected position of the teeth is used to design and position the orthodontic archwires 12 and the pearls 15 correctly.

Subsequently, the caps 24, the master-jig 26, the arms 25, and the connectors 27 are manufactured in the initial position (i.e. malocclusion) thereby forming the jig 22 so as to be able to place correctly the orthodontic system 13 and especially the appliance 10, in the mouth.

Manufacture in one piece makes it possible to do away with any assembly problems associated with manual handling. Such an orthodontic appliance 10 is especially manufactured in one piece when it is made of plastic material, for instance biocompatible resins.

Besides, it may be manufactured in at least two parts assembled together by attaching means, like snap-fitting for instance. Such a manufacture in two parts allows an optimization of the quantity of material used and allows thus a reduction of the costs. The manufacture in at least two parts may be particularly applied when the orthodontic appliance 10 comprises other material such as ceramic. Actually, the ceramic materials are generally more expensive than the plastic ones. In addition the materials used in orthodontic treatment (plastic and ceramic) need to be biocompatible. Besides, the manufacture in at least two parts may be applied for technical / economic reasons.

Besides, the pearl can be coated. More precisely, the external surface of the pearl 15 can be coated. In fact, the pearl 15 could be manufactured in metal for technical or economic reasons and coated with a smooth material at its surface to increase the patient's comfort. Likewise, the pearl 15 can be made of a smooth material; in that case, the slot 18 can be in metal in order to facilitate the insertion of the wire and to reduce the friction between the wire and the slot.

A smooth material is for instance a ceramic material or a plastic material.

To position the appliance 10 on the patient's teeth 11, the method according to the disclosure consists of simultaneously arranging the pearls 15. In this instance, the jig 22 is inserted into the patient's mouth, moved closer to the teeth of the jaw (inferior or superior) to be treated, until the caps 24 come into contact with the respective teeth 11; at this time, the pearls 15 are in contact with the relevant teeth 11 and are correctly positioned.

Once the pearls 15 are attached to the teeth 11 using attachment means, the jig 22 is separated from the pearls 15. For instance, the separation may occur in breaking the connectors 27 located between the pearls 15 and the caps 24. The rigidity of the connectors is chosen such that, on one hand, the jig 22 and especially the pearls 15 are rigidly maintained together and, on the other hand, it is easy to break the connectors. Such a break may be done manually (i.e. without any tool) or not (cut). In order to be easily breakable, each rib can have a fracture zone near the pearl; such a breakable zone allows a complete separation of the pearl from the rib.

After separation, only the appliance 10 remains in the mouth, each pearl being separated from the jig and maintained in place on the relevant teeth.

According to one embodiment of the disclosure, the archwire 12 can be placed in the slots 18 of the pearls 15 just after manufacturing. This placement can occur prior the orthodontic system 13 is placed in the mouth of a patient, for instance in the manufacturing plant. In that case, the orthodontic wire 12 may be inserted into the slot of each of the pearls prior to positioning the jig 22 on the teeth 11, i.e. prior to placing the pearls 15 on the teeth 11. In this case, once the jig 22 has been placed on the teeth 11 and the pearls 15 attached, the jig is detached from the pearls and the appliance 10 is then correctly placed in the mouth. More precisely, the connectors 27 are separated from the pearls 15.

According to another embodiment of the disclosure, the archwire 12 can be placed in the slots 18 of the pearls 15 by the practitioner itself. The orthodontic wire 12 may be inserted into the slot 18 of each of the pearls after positioning the jig 22 on the teeth 11, i.e. after simultaneously placing the pearls 15 on the teeth 11. In this case, once the jig 22 has been placed on the teeth 11 and the pearls 15 attached, it is appropriate to insert the orthodontic wire 12 into the slots 18 of the pearls 15, then the jig 22 may be detached from the pearls 15; the appliance 10 is then correctly placed in the mouth.

When inserting the wire 12 into the slot of each of the pearls 15 prior positioning the jig 22 on the teeth 11, the wire 12 takes the shortest path between adjacent pearls.

When comparing the two different techniques (inserting prior to positioning or after positioning the jig 22) the orthodontic wire 12 will follow two different paths. In the first case the path will eventually go through a tooth 11 while in the second technique it will not. In other words, there is a need to add extra features. Supplementary parts are added to the jig 22 to drive the wire 12 correctly, thus allowing the jig 22 to be placed on the teeth 11. These parts may be either guides or contours of teeth 11 and are removed after the pearls 15 once detached.

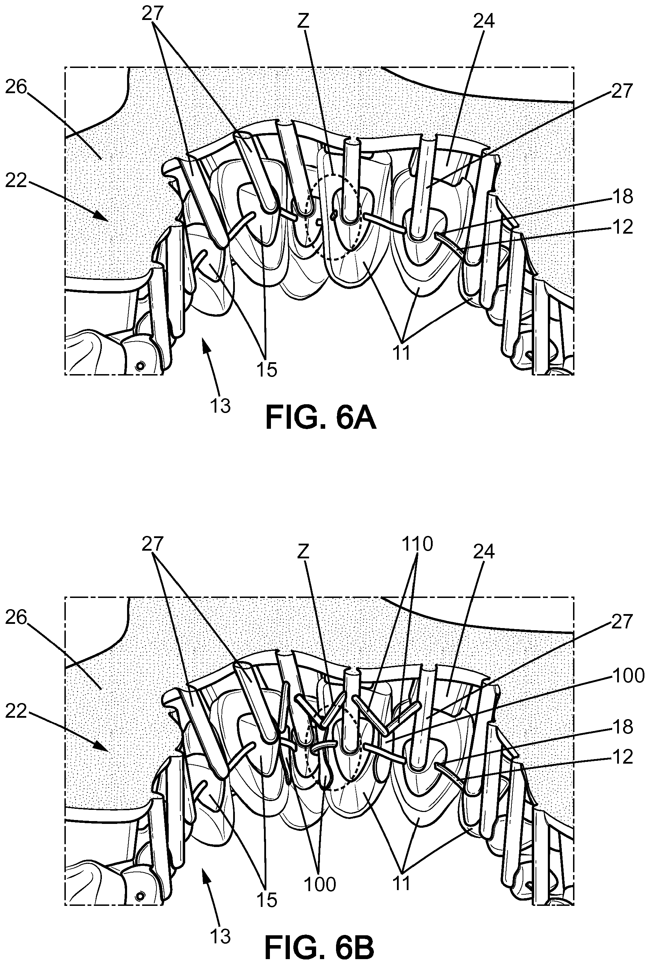

Actually, the operator does not necessarily know the position of the teeth when he/she physically places the orthodontic wire 12 in the laboratory. The path of the orthodontic wire 12 may then not take into account the geometry of the teeth. When the device will have to be positioned in the mouth, the orthodontic wire 12 will block the insertion since it may arrive physically in the same place as a tooth as depicted schematically in figure 6A, especially in the zone Z in dash points. The orthodontic wire 12 goes "through a tooth".

In order to overcome this problem, skirt elements 100 allowing the operator to position well physically the orthodontic wire 12 can be further provided on the jig 22, as depicted in Figure 6B. With such skirt elements 100, the orthodontic wire 12 can go around the tooth in bypassing these skirt elements 100 that will be removed with the jig 22 after bonding (see Figure 6B, especially in the zone Z in dash points). Thus, the device can be inserted correctly in the mouth. As depicted on figure 6B, the skirt elements 100 may be attached to the jig 22 via skirt connectors 110 linked to the connectors 27.

The orthodontic wire 12 is suitable for being deformed between an initial position wherein the patient's teeth 11 exhibit an alignment defect and a final position wherein the position of the patient's teeth 11 is corrected.

According to the disclosure another use of the appliance 10 than the orthodontic treatment described above, is for a contention treatment. Such a contention treatment is generally made during the entire life of the patient. After orthodontic treatment as disclosed above, the appliance is not removed from the mouth of the patient, but maintained in order to avoid any future teeth displacement.

## Claims

1. An orthodontic system for the orthodontic treatment of a patient's teeth (11), the orthodontic system (13) comprising an appliance (10) and a jig (22), wherein the appliance (10) comprises pearls (15) which are each provided with a slot (18) into which an orthodontic wire (12) can be inserted, wherein the pearls (15) are interconnected by means of the jig (22) and wherein the jig (22) comprises separated caps (24), said caps (24) being shaped individually to the shape of the teeth (11).

2. The orthodontic system of the preceding claim, wherein the caps (24) are interconnected.

3. The orthodontic system of claim 1 or claim 2, wherein the jig (22) further includes a master-jig (26), the caps (24) being interconnected by means of the master-jig (26).

4. The orthodontic system of anyone of the preceding claims, wherein the pearls (15) are each detachable from the jig (22).

5. The orthodontic system of any one of the preceding claims, wherein the caps (24) are connected to the pearls (15).

6. The orthodontic system of the preceding claim, wherein the pearls (15) are each detachable from caps (24).

7. The orthodontic system of any one of the preceding claims, further comprising at least one mark (15').

8. A method for the placement of an appliance (10) for the orthodontic treatment of a patient's teeth (11), the appliance (10) comprising pearls (15) which are each provided with a slot (18) into which an orthodontic wire (12) can be inserted, the method comprising a step of placement of an orthodontic system (13) on the patient's teeth (11), the orthodontic system (13) comprising the appliance (10) and a jig (22), the jig (22) comprising separated caps (24), said caps (24) being shaped individually to the shape of the teeth (11), wherein the pearls (15) are positioned simultaneously on the teeth (11) in being interconnected by means of the jig (22).

9. The method of the preceding claim, wherein after the step of placement of the orthodontic system (13), the pearls (15) are each detached from the jig (22).

10. The method of the preceding claim, wherein the pearls (15) are each detached from the connectors (27) via which they are attached to the jig (22).

11. The method of claim 9 or claim 10, further comprising a step of removal of the jig (22), the jig (22) further including an master-jig (26), the caps (24) being interconnected by means of the master-jig (26).

12. The method of any one of claims 8 to 11, further comprising a step wherein an orthodontic wire (12) is inserted into the slot (18) of each of the pearls (15).

13. The method of the preceding claim, wherein the orthodontic wire (12) is inserted into the slot (18) of each of the pearls (15) prior the placement of the orthodontic system (13) on the patient's teeth (11).

14. The method of any one of claims 8 to 13, wherein the orthodontic system (13) is provided with a mark (15') and the placement of the orthodontic system (13) is made correctly thanks to the mark (15').

15. A use of the appliance (10) of the orthodontic system (13) of any one of claims 1 to 7 for a contention treatment.
